# EUROPEAN PATENT SPECIFICATION

(11) **EP 1 511 826 B1**
(45) Date of publication and mention of the grant of the patent: **22.05.2019**
(21) Application number: 03752638.1
(22) Date of filing: 06.06.2003
(51) Int. Cl.: C10L 1/00

(54) **SYNTHETIC FUEL WITH REDUCED PARTICULATE MATTER EMISSIONS AND A METHOD OF OPERATING A COMPRESSION IGNITION ENGINE USING SAID FUEL IN CONJUNCTION WITH OXIDATION CATALYSTS**
SYNTHETISCHER BRENNSTOFF MIT VERMINDERTEN FESTPARTIKELEMISSIONEN UND EINE METHODE ZUM FAHREN EINES DIESELMOTORS MIT DIESEM BRENNSTOFF IN ANWESENHEIT EINES OXYDATIONSKATALYSATORS
CARBURANT DE SYNTHESE A EMISSION REDUITE DE MATIERES PARTICULAIRES ET UN PROCEDE DE FONCTIONNEMENT D'UN MOTEUR A COMBUSTION PAR COMPRESSION UTILISANT UN TEL CARBURANT EN COMBINAISON AVEC DES CATALYSEURS D'OXYDATION

(30) Priority: 07.06.2002 ZA 200204572; 11.04.2003 ZA 200302855
(43) Date of publication of application: 09.03.2005
(73) Proprietor: Sasol Technology (Pty) Ltd, 2196 Johannesburg (ZA)
(72) Inventor: MYBURGH, Ian, Stradling, 1911 Vanderbijlpark (ZA); SCHABERG, Paul, Werner, 7405 Pinelands (ZA)
(74) Representative: Samson & Partner Patentanwälte mbB
(86) International application number: PCT/ZA2003/000075
(87) International publication number: WO 2003/104361

(56) References cited:
- WO-A-00/20534
- WO-A-00/20535
- WO-A-01/49812
- WO-A-01/83647
- WO-A-98/34998

## Description

### FIELD OF THE INVENTION

This invention relates to a synthetic compression ignition engine fuel, to a method of making that fuel, and to a method of operating a compression ignition engine using said fuel, and in conjunction with oxidation catalysts.

### BACKGROUND OF THE INVENTION

It has been stated that the potential impact of a fuel on diesel emissions has been recognized by state and federal regulatory agencies, and fuel specifications have now become a part of emissions control legislation. Studies both in the U.S. and in Europe have concluded that particulate emissions are generally a function of fuel sulfur content, aromatics content and cetane number. Consequently, the U.S. Environmental Protection Agency has set a limit on diesel fuel sulfur content of 0.05 wt % as well as a minimum cetane number of 40, with even stricter limits on sulphur content being envisaged in the future. Additionally, the state of California has set a 10 vol % maximum on aromatics content. Also, alternative fuels are beginning to play more of a role for low emissions vehicles. Thus, the search for efficient, clean burning fuels, particularly with low particulate emissions remains ongoing.

Epidemiological investigations have suggested an association between health effects and ambient suspended particulate matter. These studies have associated disease incidence with particulate matter exposure. Research is continuing in many areas to identify a biological mechanism whereby this association can be explained, but as yet there are only hypotheses. Lung responses to particles in the 50 nm size range have been identified, where there are none when the same material is introduced as 250 nm particles. This has lead to the suggestion that adverse health effects are associated with the ultrafine particle fraction, and has promoted interest in the potential health effects of the particle itself, rather than any chemical property of the particle. Thus the number of nanoparticles emitted is possibly of greater importance than the composition of the particle.

Typically, diesel particle emissions have a bimodal size distribution, when particle number emissions are plotted on a logarithmic scale. The first mode is associated with particles formed by accumulation, and has a peak in the size range between 500 and 50 nm. These particles are referred to as ultrafine particles. The second peak is in the size range between 50 and 5 nm, and is associated with particles formed by nucleation. Particles in this size range are generally referred to as nanoparticles. Further distinction is made between fine particles (or PM2.5, diameter < 2 500 nm), and PM10 (diameter < 10 000 nm).

The accumulation mode particles account for most of the mass of diesel particulate emissions, while the greatest numbers of particles are found in the nanoparticle size range.

The concerns regarding the health effects of very small particles have been compounded by observations that modern diesel engines, while emitting lower particle mass concentrations than older engines, may actually emit higher particle number concentrations than the older engines. Most of the particles emitted are in the nanoparticle size range, and it has been suggested that the reason for increased number of these particles is that the nucleation and growth of nanoparticles is suppressed by the presence of existing carbon particles which are found in the accumulation mode size range. Thus, older engines with higher particulate mass emissions can display lower nanoparticle number emissions. Since it has been demonstrated that the use of synthetic diesel fuels results in lower particulate mass emissions than conventional crude oil-derived diesel fuels, it is possible that the same mechanism may result in higher particle number concentrations being emitted with these fuels.

Surprisingly, after extensive research, the applicant has now developed a fuel having a composition which results in superior nanoparticle number emission properties compared to low sulphur crude oil-derived diesel fuel.

WO 00 20534 A discloses a compression ignition engine fuel derived from a Fischer-Tropsch process having an iso:n paraffins ratio which generally decreases in the range of C18 to C22.

### SUMMARY OF THE INVENTION

In this specification whenever the term diesel fuel is used it is intended to include any middle distillate cut useful in a compression ignition engine (CI engine).

In accordance with this invention there is provided a compression ignition (CI) engine fuel derived from a Fischer-Tropsch process as defined in claim 1, wherein the iso:n paraffins ratio of the fuel increases from a paraffin carbon number of C₉ to a paraffin carbon number of C₁₆ and then from a paraffin carbon number of C₁₉ to a paraffin carbon number of C₂₂, and the fuel has less than 0.05% m/m sulphur, and less than 10% by mass aromatics.

Said CI engine, when combusting said fuel, emitting particulates having a maximum number weighted particle size distribution of less than 1 x 10⁸ particles per cm³ between 10nm and 20nm particle size.

The iso:n paraffins ratio may generally increase with increasing paraffins carbon number at least between C₉ to C₂₄.

The particulates which are emitted may have a particle size distribution in which fewer nanoparticles are produced than that emitted when a diesel fuel derived from crude oil is combusted in a compression ignition engine.

The fuel may contain predominantly branched paraffins, that is, ≥50 mass% iso-paraffins, typically > 55 mass%, and more typically ≥60 mass% iso-paraffins.

The iso-paraffin to n-paraffin mass ratio may be from 1:1 to 4:1, typically from 3:2 to 3:1, generally 2:1.

In one embodiment the iso-paraffin to n-paraffin mass ratio is 21:10.

The fuel may be predominantly C₈ to C₂₄ material.

The fuel may be predominantly C₉ - C₂₂.

The fuel may include in excess of 70 mass% of C₁₂ and heavier.

The fuel may have an average carbon number of between 13 and 19, typically about 15.

The fuel according to the invention has on average more than 0.9 alkyl branches per paraffinic molecule as measured by H⁺ NMR analysis.

The fuel may have more than 1 alkyl branch per paraffinic molecule.

The fuel may be substantially oxygenate free, typically having less than 0.1% oxygen. The fuel may have less than 0.01% and typically less than 0.005% oxygen.

The fuel may have a cetane number of at least 55, typically at least 65. The fuel may have a cetane number of 74.

The invention extends to a diesel fuel which, when combusted in a compression ignition engine under normal combustion conditions, results in emissions having a reduction of more than 70% in the number of particles in the ≤50 nm size range, when compared to a low sulphur crude oil-derived diesel fuel combusted under similar conditions.

The reduction may be greater in the ≤30 nm range.

The fuel may have characteristics as set out in Table 1 below:

**Table 1: Composition and Characteristics of the Synthetic Diesel Fuel**

| Property | | Value |
|---|---|---|
| Specific Gravity, 60°F | | 0.765 |
| Nitrogen | ppm | < 1 |
| Sulfur | ppm | < 1 |
| Cloud Point | °C | -18 |
| Cetane Number | | 74.8 |
| Total Aromatics (wt %) | wt % | < 1.0 |
| GC-MS Analysis | | |
| ▪ Paraffins, wt% | wt % | 100 |
| ▪ Paraffin iso/n ratio | Mass | 2.1 |
| ▪ Olefins, wt% | wt % | 0 |
| ▪ Percent of material C12-C24 | Mass | 80.7 |
| ▪ Average Carbon Number | | 15.2 |
| ▪ Alkyl branches/molecule | | 1.0 |

| Distillation (D-86, vol %) | | |
|---|---|---|
| IBP | °C | 169 |
| 10 | °C | 187 |
| 50 | °C | 251 |
| 90 | °C | 312 |
| FBP | °C | 329 |

The branching characteristics of the fuel are summarized in table 2 below:

**Table 2: Branching Characteristic of Low Emission Diesel Fuel**

| | Paraffins | | | iso/n-paraffin Ratio |
|---|---|---|---|---|
| | n-paraffins % | Iso-paraffins % | Total | |
| C9 | 2.96 | 0.00 | 2.96 | --- |
| C10 | 3.59 | 4.24 | 7.83 | 1.18 |
| C11 | 3.80 | 4.65 | 8.45 | 1.22 |
| C12 | 3.65 | 4.77 | 8.42 | 1.31 |
| C13 | 3.41 | 5.34 | 8.75 | 1.57 |
| C14 | 3.00 | 5.34 | 8.34 | 1.78 |
| C15 | 2.61 | 5.56 | 8.17 | 2.13 |
| C16 | 2.33 | 8.65 | 10.98 | 3.71 |
| C17 | 1.99 | 5.74 | 7.72 | 2.89 |
| C18 | 1.51 | 6.11 | 7.62 | 4.04 |
| C19 | 1.60 | 5.98 | 7.58 | 3.73 |
| C20 | 1.18 | 5.35 | 6.53 | 4.52 |
| C21 | 0.58 | 3.82 | 4.41 | 6.54 |
| C22 | 0.22 | 2.00 | 2.23 | 8.94 |

According to a further aspect of the invention, there is provided a method of improving the conversion efficiency of oxidation catalysts used in conjunction with compression ignition engines, said method including combusting a compression ignition engine fuel as described above in the compression ignition engine in the presence of said oxidation catalysts and oxygen or an oxygen containing gas.

The method may include the operation of the compression ignition engine at idling and low engine loads.

The compression ignition engine fuel may be a synthetic Fischer-Tropsch derived fuel which may in turn be a GTL diesel fuel.

According to a further aspect of the invention there is provided the use of a compression ignition engine fuel as claimed in claim 1 to 8 in a compression ignition engine which use is characterized in that it comprises combusting said compression ignition engine fuel with an oxygen containing gas in a CI engine to produce low particulates emissions.

Said CI engine, when combusting said fuel emitting particulates having a maximum number weighted particle size distribution of less than 1 x 10⁸ particulates per cm³ between 10nm and 20nm particle size,.

The particulates which are emitted may have a particle size distribution in which fewer nanoparticles are produced than that emitted when a diesel fuel derived from crude oil is combusted in a compression ignition engine.

### DESCRIPTION OF EMBODIMENTS OF THE INVENTION

The invention will now be illustrated, by way of non-limiting examples only, with reference to the accompanying Figure 1.

### Figure 1 - FT work-up process

A FT work-up process is outlined in the attached Figure 1. The synthesis gas (syngas), a mixture of Hydrogen and Carbon Monoxide, enters the FT reactor 1 where the synthesis gas is converted to hydrocarbons by the FT process.

A lighter FT fraction is recovered in line 7, and may or may not pass through fractionator 2 and hydrotreater 3. The product 9 (9a) from the hydrotreater may be separated in fractionator 4 or, alternatively, mixed with hydrocracker 5 products 16 and sent to a common fractionator 6.

A waxy FT fraction is recovered in line 13 and sent to hydrocracker 5. If fractionation 2 is considered then the bottoms cut 12 is also sent to hydrocracker 5. The products 16, on their own or mixed with the lighter fraction 9a, are separated in fractionator 6.

Depending on the process scheme, a light product fraction, naphtha 19, is obtained from fractionator 6 or by blending equivalent fractions 10 and 17. This is a C₅-160°C fraction useful as naphtha.

A somewhat heavier cut i.e. the middle cut, synthetic diesel 20, is obtainable in a similar way from fractionator 6 or by blending equivalent fractions 11 and 18. This cut is recovered as a 150-370°C fraction useful as diesel

The heavy unconverted material 21 from fractionator 6 is recycled to extinction to hydrocracker 5. Alternatively, the residue may be used for production of synthetic lube oil bases. A small amount of C₁-C₄ gases is also separated in fractionator 6.

The described FT work-up process of Figure 1 may be combined in a number of configurations. The applicant considers these an exercise in what is known in the art as Process Synthesis Optimisation.

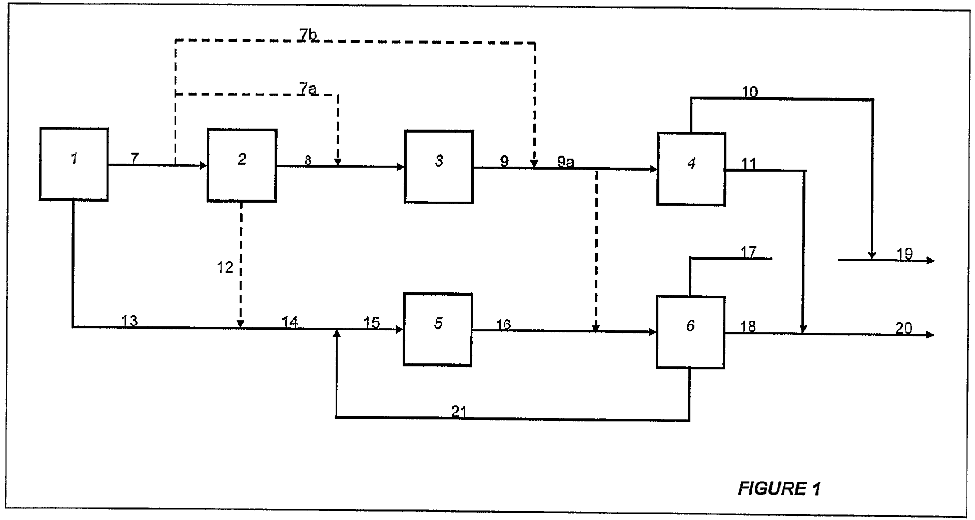

### Examples of Use of Low Emission Diesel Fuel

Tests were conducted using the fuels of the invention:

### EXAMPLE 1: Particle Number Emissions

For the purposes of comparing particle number emissions and size distributions, a commercially available, low sulphur diesel fuel approved by the US Environmental Protection Agency for on-highway use, was used as the reference fuel. Important characteristics of the two test fuels are presented in Table 3.

**Table 3: Analysis of Test Fuels**

| Property | Test Method | Low-S Diesel Reference Fuel | Synthetic Diesel Fuel |
|---|---|---|---|
| Specific Gravity, 60°F | ASTM D4052 | 0.8705 | 0.7647 |
| Kinematic Viscosity., 40°C (cSt) | ASTM D445 | 3.199 | 2.007 |
| Flash Point (°C) | ASTM D93 | 82 | 60 |
| Cloud Point (°C) | ASTM D2500 | -19 | -18 |
| Total Sulphur (ppm) | ASTM D2622 | 404 | <1 |
| Distillation (°C) | ASTM D86 | | |
| | IBP | 196 | 169 |
| | 10% | 223 | 187 |
| | 50% | 273 | 251 |
| | 90% | 330 | 312 |
| | FBP | 359 | 329 |
| Cetane Number | ASTM D613 | 41.5 | 74.8 |
| Total Aromatics (wt %) | ASTM D5186 | 38.4 | <1.0 |
| Oxygen as Oxygenates according to GC-MS analysis, (ppm) | | | <6 |
| Oxygen as primary C12 - C24 alcohol (ppm) | | | <6 |
| Oxygen as primary C7 - C12 alcohol (ppm) | | | <6 |

Exhaust particle number emissions and size distributions were measured using two test engines, a heavy-duty diesel engine, and a passenger car diesel engine.

The heavy-duty diesel engine was a Caterpillar™ model C12 modified to be compliant with 1998 US emission levels. This engine is a 6 cylinder, 12 liter, turbocharged, after-cooled diesel engine rated at 312 kW at 2100 rev/min, with a peak torque of 2237 Nm at 1200 rev/min. A 5W-40 synthetic lubricating oil, which had been aged for 40 hours, was used in the engine during the tests.

The passenger car engine was a 1999 Volkswagen™ TDI diesel engine. This engine is a 4 cylinder, 1.9 liter, turbocharged, charge-air cooled diesel engine, rated at 66 kW. The standard exhaust aftertreatment equipment, in the form of an oxidation catalyst, was fitted for the tests. A 5W-40 synthetic lubricating oil, which had approximately 125 hours of running time in the engine at the onset of testing, was used in the engine during the tests.

The test engines were fully warmed up and operated under steady-state conditions while the measurements were conducted. The heavy-duty engine was tested at four different speed and load settings, while the passenger car engine was tested at five different speed and load settings. The speed and load settings used for the two engines are presented in Table 4. For each fuel, one set of measurements was made per day for three consecutive days, and the results averaged to obtain the final size distribution for each test mode. For the purposes of illustration, a single composite size distribution was then obtained for each engine and fuel, by averaging the size distributions from each test mode.

**Table 4: Engine Test Modes**

| Mode Number | Heavy-duty Engine | | Passenger Car Engine | |
|---|---|---|---|---|
| | Speed (rev/min) | Load (Nm) | Speed (rev/min) | Load (Nm) |
| 1 | 1 700 | 569 | 2 620 | 72 |
| 2 | 1 400 | 366 | 2 500 | 152 |
| 3 | 1 200 | 814 | 1 900 | 101 |
| 4 | 800 | idle | 1 400 | 40 |
| 5 | - | - | 1 200 | idle |

Particle size distributions in the exhaust were measured by means of a micro-dilution device, a Scanning Mobility Particle Sizer (SMPS), and a Condensation Particle Counter (CPC). The SMPS measures particle electric mobility diameter and the CPC measures particle number concentrations in the diameter range of 7 to 300 nm in a 4-minute (2 minutes up, 2 minutes down) scan time. This particle measurement system consists of a neutralizer, a mobility section, a TSI model 3010 CPC, and a computerized control and data acquisition system. The dilution system is described in more detail in SAE Paper 1999-01-1142, 1999 by Abdhul-Khalek, I.S., Kittelson, D.B., and Brear, F., "The Influence of Dilution Conditions on Diesel Exhaust Particle Size Distribution Measurements", and SAE Paper 1999-01-1142, 1999 by Abdhul-Khalek, I.S., Kittelson, D.B., and Brear, F., "The Influence of Dilution Conditions on Diesel Exhaust Particle Size Distribution Measurements".

The micro-dilution tunnel pre-conditions the exhaust sample before the sample enters the SMPS. In the configuration used in these tests, the first-stage dilution temperature was held constant at approximately 40°C for the heavy duty engine tests, and 30°C for the passenger car engine tests.

The two-stage air ejector exhaust dilution system is designed to allow variation of the residence time in the primary dilution stage, before secondary dilution. For these tests, a relatively short residence time (0.8 seconds) in the micro-dilution tunnel was maintained. The exhaust enters a sampling probe that is immersed in the exhaust flow and then passes through a short section of stainless steel tube that is insulated and heated to keep the sample temperature and the exhaust temperature equal. Downstream of the sample line, an ejector pump with a flow orifice provides the first stage (primary) dilution. The ejector pump consists of a compressed air inlet, sample inlet (orifice location), and one outlet. Filtered and compressed air at 276 kPa (40 psi) is used to drive the ejector pump, which in turn draws an exhaust sample flow through the orifice. This air then mixes with the exhaust sample providing primary dilution. The primary dilution ratio varied between 9:1 and 12:1.

The secondary dilution stage is designed to halt additional particle growth and to provide a final particle number concentration in the dilute exhaust sample within the measurement range of the CPC. Filtered, compressed air at 207 kPa (30 psi) is used to drive the ejector pump, which draws an exhaust sample flow through an orifice, from the micro-dilution tunnel. The secondary dilution ratio varied between 19:1 and 22:1.

The composite, number weighted, particle size distributions for the synthetic diesel fuel and the reference fuel, are shown in Figures 2 and 3, for the heavy-duty engine and the passenger car engine, respectively. As the ranges of the measured particle number emissions and sizes are large, the graphs are plotted with logarithmic axes.

It can be seen that with both engines, the particle size distributions with the reference fuel have distinctive bimodal size distributions, with both the nucleation mode and the accumulation mode being present. It can also be seen that, with both engines, the numbers of particles in the size range below approximately 30 nm are significantly lower with the synthetic diesel fuel, than with the low sulphur reference diesel fuel. Because most of the particle number emissions are concentrated in this size range, this has the consequence that the total particle number emissions are also significantly lower with the synthetic diesel fuel, than with the low sulphur diesel fuel. These findings are summarized in Figure 4, which shows a comparison of the integrated particle numbers in the size ranges below 30 nm, below 50 nm, and below 300 nm. It can be seen that for both engines, there are reductions in the number of particles emitted in these different size classifications, of greater than 65%.

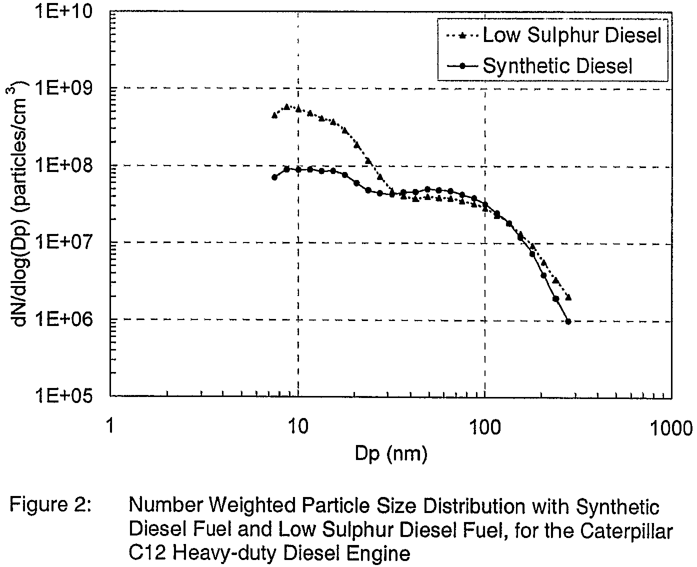

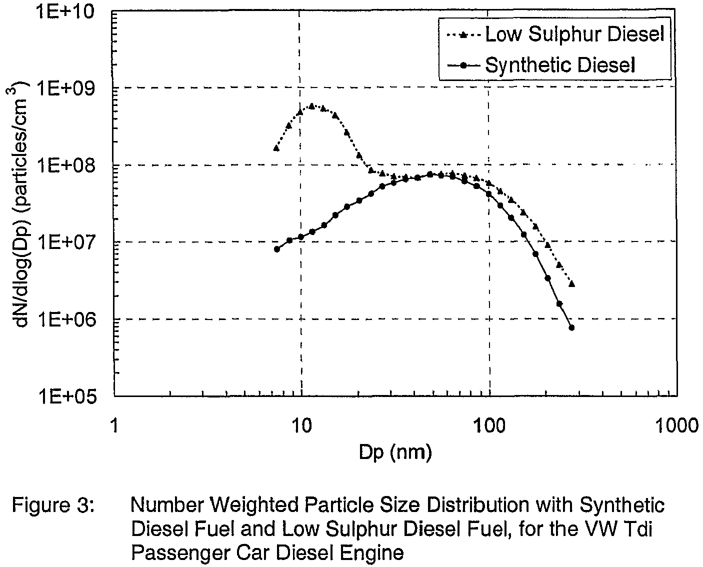

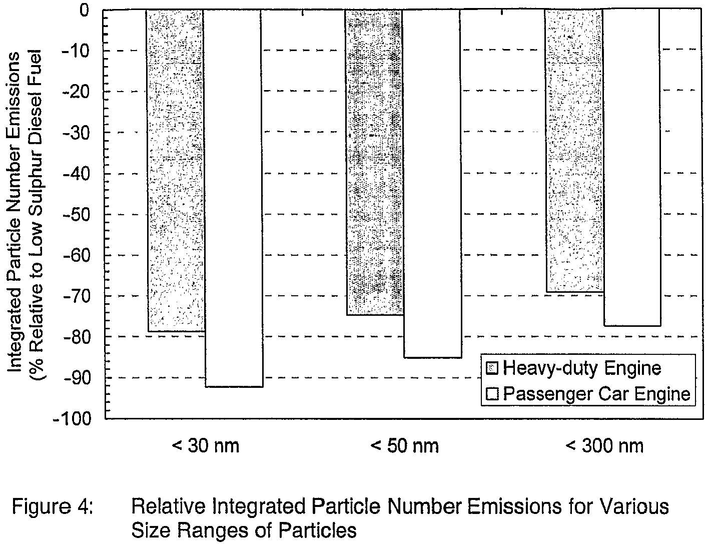

### Regulated Exhaust Emissions

For the purposes of comparing regulated exhaust emissions, a fuel meeting the US Environmental Protection Agency requirements for low sulphur diesel fuel for on-highway use, was used as the reference fuel in the tests. Important characteristics of the reference fuel and the synthetic diesel fuel are shown in Table 5.

**Table 5: Properties of Test Fuels**

| Property | Test Method | Low Sulphur Diesel Reference Fuel | Synthetic Diesel Fuel |
|---|---|---|---|
| Density at 15°C (kg/l) | ASTM D4052 | 0.8457 | 0.7769 |
| Distillation (°C) | ASTM D86 | | |
| ▪ IBP | | 184 | 189 |
| ▪ 10% | | 214 | 209 |
| ▪ 50% | | 259 | 256 |
| ▪ 90% | | 312 | 331 |
| ▪ FBP | | 342 | 356 |
| Viscosity at 40°C (cSt) | ASTM D445 | 2.35 | 2.43 |
| Cetane Number | ASTM D613 | 40.3 | > 73.7 |
| Total Sulphur (mass %) | ASTM D4294 | 0.022 | 0.001 |
| Total Aromatics (mass %) | HPLC | 42.78 | 0.47 |
| Polynuclear Aromatics (mass %) | | 9.39 | 0.03 |
| Cloud Point (°C) | ASTM D2500 | -18 | -29 |
| CFPP (°C) | IP 309 | -21 | -37 |

Regulated exhaust emissions were measured using the diesel engine described in Table 6. This unit was modified and calibrated to meet the 1991 US emission standards. Hot-start transient emission tests were conducted in accordance with the EPA Federal Test Procedure (FTP) as specified in the Code of Federal Regulations (CFR), Title 40, Part 86, Subpart N. Testing procedures incorporated instrumentation and sample system calibrations, engine performance checks, gaseous and particulate emissions sampling and measurement, and transient test performance evaluations. The emissions measured included unburned hydrocarbons (HC), carbon monoxide (CO), nitrogen oxides (NOx), and particulate matter (PM).

Three hot-start tests were performed with each fuel, and the results presented represent the averaged values from the three tests. The transient torque map that was used during the tests was generated using the synthetic fuel, thereby ensuring that peak engine loads attained during test runs would be similar for both fuels.

**Table 6: Characteristics of 1988 DDC Series 60 Engine**

| | |
|---|---|
| Engine configuration | In-line 6 cylinder, |
| Displacement | 12.7 liter (130 mm bore, 160 mm stroke) |
| Aspiration | Turbocharged, intercooled |
| Rated Power | 261 kW at 1800 rev/min |
| Rated Torque | 1830 Nm at 1200 rev/min |
| Fuel Injection | Direct injection, electronically controlled unit injectors |
| Restrictions for Transient Cycle | Inlet: 4.0 kPa |
| | Exhaust: 9.5 kPa |
| Low idle speed | 600 rev/min |

The results of the emission tests are presented numerically in Table 7, and are compared between the two test fuels graphically in Figure 5.

**Table 7: Results of Transient Hot-Start Emission Tests**

| Emission | Hot Start Transient Emissions (g/kWh) | |
|---|---|---|
| | Low Sulphur Diesel Fuel | Synthetic Diesel Fuel |
| HC Mean value | 0.215 | 0.094 |
| ▪ Std. Deviation | 0.011 | 0.006 |
| ▪ Coeff. of Var., % | 5.1 | 6.4 |
| CO Mean value | 3.829 | 2.571 |
| ▪ Std. Deviation | 0.100 | 0.042 |
| ▪ Coeff. of Var., % | 2.6 | 1.6 |
| NOx Mean value | 7.050 | 5.081 |
| ▪ Std. Deviation | 0.033 | 0.049 |
| ▪ Coeff. of Var., % | 0.5 | 1.0 |
| PM Mean value | 0.277 | 0.217 |
| ▪ Std. Deviation | 0.006 | 0.003 |
| ▪ Coeff. of Var., % | 2.2 | 1.4 |

It can be seen that with the synthetic diesel fuel produced significantly lower emissions relative to the low sulphur diesel fuel.

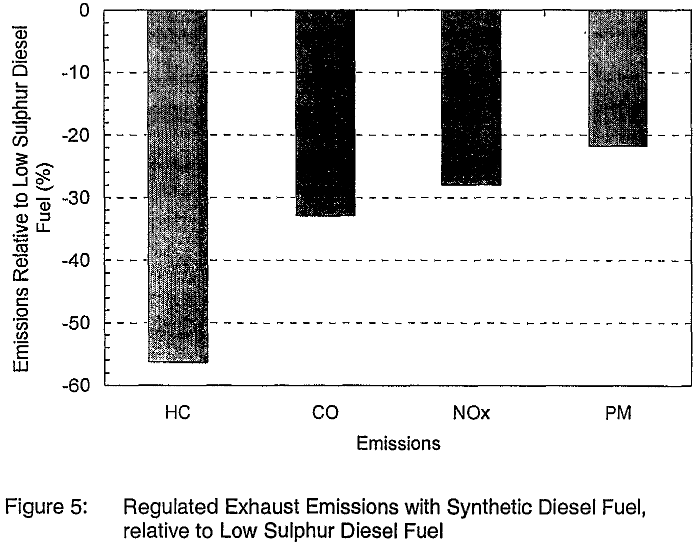

### EXAMPLE 2: OXIDATION CATALYST PERFORMANCE TESTS

Various exhaust emission tests were carried out to compare a Japanese low sulphur diesel fuel derived from crude oil and GTL diesel fuel, a synthetic compression ignition fuel of the present invention. The tests focused on regulated emissions of hydrocarbons (HC), carbon monoxide (CO), nitrogen oxides (NOx) and particulate matter (PM), as well as carbon dioxide (CO₂). The emission tests were performed on a Japanese heavy-duty vehicle, and tests were conducted both with and without an oxidation catalyst fitted in the vehicle exhaust.

The types of emission tests performed were a Japanese 13 mode steady-state test cycle for heavy-duty engines, and modes 2, 5, and 8 of the Tokyo test cycle, a special test cycle representative of congested traffic patterns encountered in the Tokyo inner city environment.

The properties of the synthetic diesel fuel used for the tests were typical of diesel produced by low temperature Fischer-Tropsch processes, with a very high cetane number (> 70), very low sulphur (< 1 ppm), and a very low aromatics content (< 1 %). In addition, the GTL diesel used in this study also has good natural cold flow properties (CFPP < -20°C). The reference diesel fuel used had a sulphur content of 29 ppm, an aromatics content of 21 %, and a cetane number of 57.5. The properties of the test fuels are shown in Table 8.

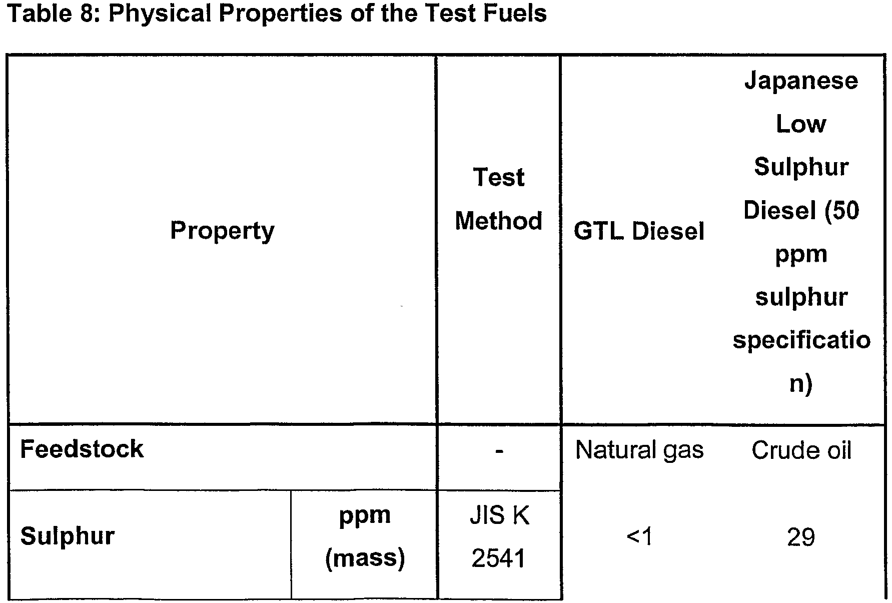

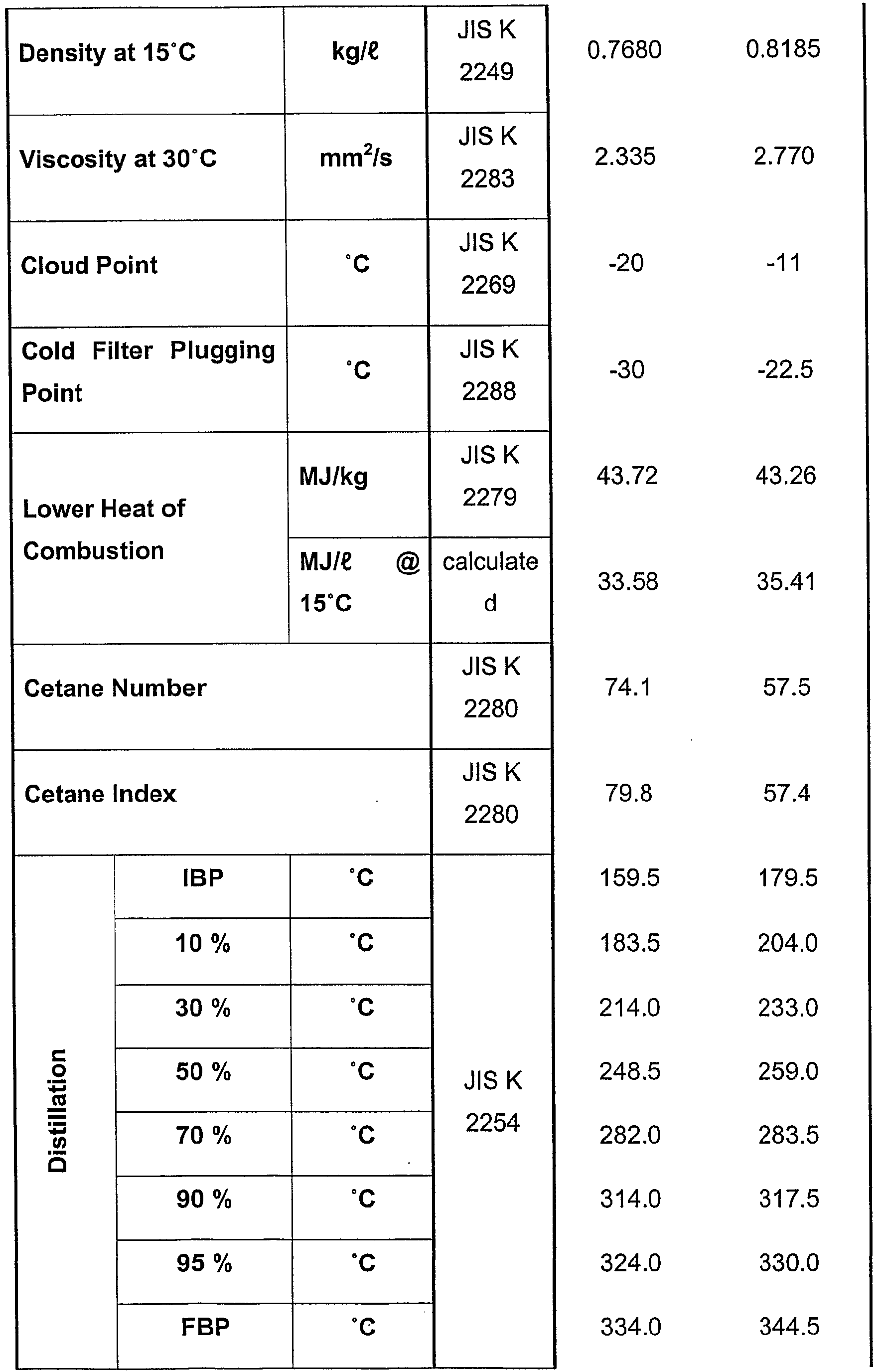

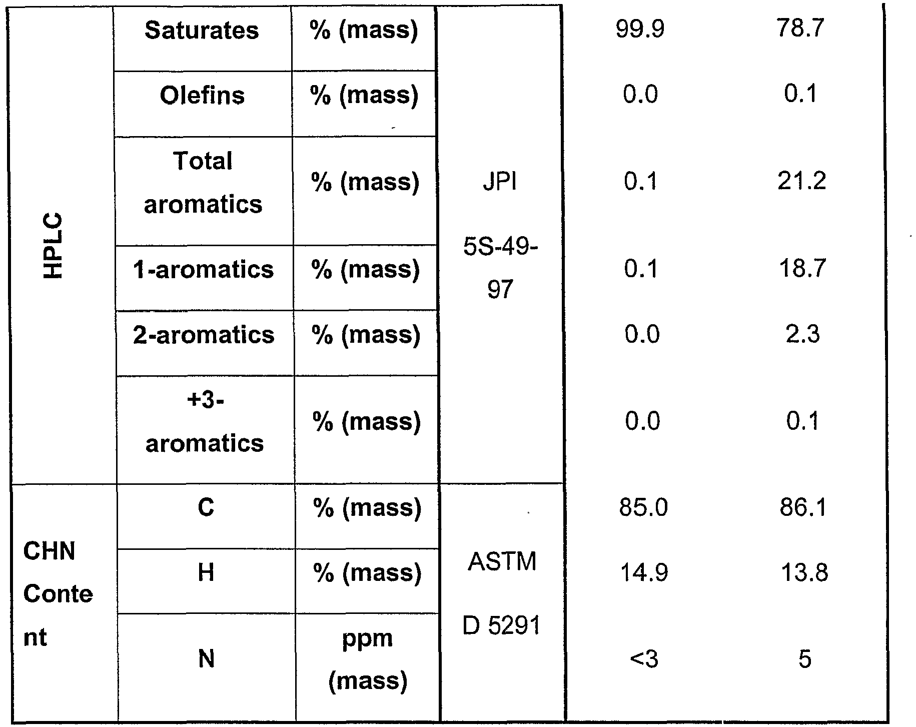

Details of the test vehicle are given in Table 9, and details of the emission test cycles are given in Table 10 for the 13 mode test, and Figure 6 for modes 2, 5, and 8 of the Tokyo test cycle.

**Table 9: Heavy-Duty Test Vehicle**

| **Vehicle Type** | | **Truck** |
|---|---|---|
| **Model Year** | | 1998 |
| **Vehicle Weight** | **kg** | 2 808 |
| **Equivalent Inertia Weight** | **kg** | 6 025 |
| **Engine** | | In-line 5 cylinder |
| **Displacement** | **ℓ** | 6.634 |
| **Compression Ratio** | | 19.2: 1 |
| **Fuel Injection** | | DI, In-line injection pump |
| **Aspiration** | | Natural |
| **Peak Power** | **kW @ r/min** | 125 @ 2900 |
| **Peak Torque** | **Nm @ r/min** | 450@ 1 600 |
| **Equipment for low emissions** | EGR | |
| | Oxidation catalyst | |

**Table 10: Japanese 13-Mode Steady-State Emission Test Cycle for Heavy-Duty Engines**

| **Mode** | **Speed (% of rated)** | **Load (% of rated)** | **Weighting Factor** |
|---|---|---|---|
| 1 | idle | - | 0.205 |
| 2 | 40 | 20 | 0.037 |
| 3 | 40 | 40 | 0.027 |
| 4 | idle | - | 0.205 |
| 5 | 60 | 20 | 0.029 |
| 6 | 60 | 40 | 0.064 |
| 7 | 80 | 40 | 0.041 |
| 8 | 80 | 60 | 0.032 |
| 9 | 60 | 60 | 0.077 |
| 10 | 60 | 80 | 0.055 |
| 11 | 60 | 95 | 0.049 |
| 12 | 80 | 80 | 0.037 |
| 13 | 60 | 5 | 0.142 |

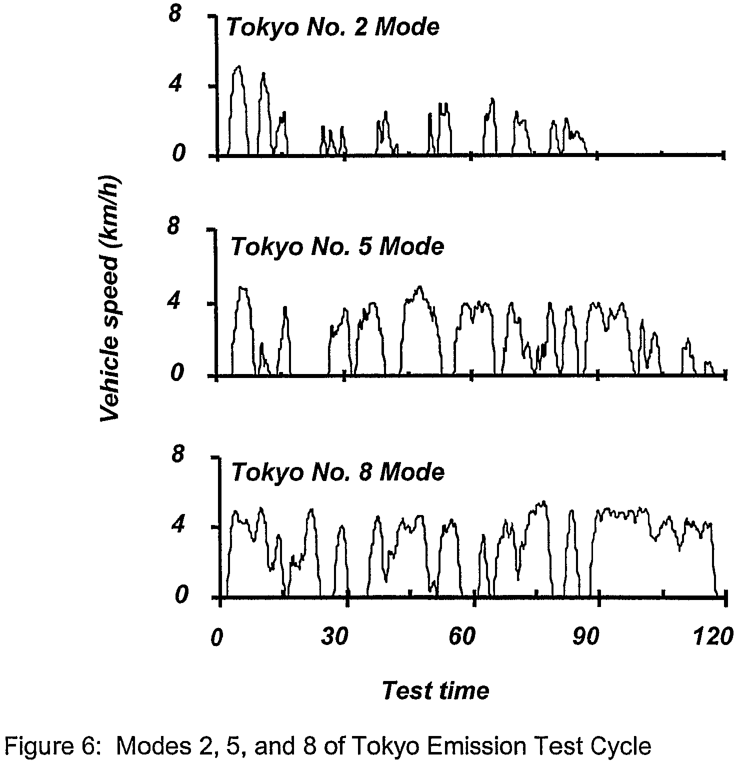

During testing, the exhaust gas was diluted with purified air, supplied at a temperature of 25 °C and a relative humidity of 50%, in a dilution tunnel. The exhaust gas measurement system (Horiba VETS-9000) included an exhaust gas analyser (Horiba MEXA-9400F), a constant volume sampler (CVS-120T) and a low-volume sampler (LVS). A glass fibre filter (Pallflex TX40HI20-WW) of 70 mm diameter was used for sampling PM in the LVS.

The results of each of the emission tests are presented in Tables 11, 12, 13, and 14. It can be seen that, in general, all of the regulated emissions (HC, CO, NOx, and PM) are lower with the GTL diesel fuel, when compared to the Japanese low sulphur diesel fuel. Also shown in each table, is the apparent conversion efficiency of the oxidation catalyst fitted in the vehicle exhaust. This is defined as the difference in emission level measured with and without the catalyst fitted, expressed as a percentage of the emission level without the catalyst fitted. The oxidation catalyst is fitted to primarily to reduce HC, CO, and PM emissions, and the conversion efficiencies for NOx are therefore not indicated.

It can be seen that the conversion efficiencies measured with the GTL diesel fuel for HC and CO are always higher than those measured with the low sulphur diesel. The conversion efficiency for PM was lower with the GTL fuel for Mode 8 of the Tokyo test cycle, but higher for all other tests. The averaged conversion efficiencies for all of the tests are shown in Table 15, where it can be seen that the conversion efficiency with the GTL diesel fuel was higher than that of the Japanese low sulphur diesel by 29, 27, and 3 percentage points, for HC, CO, and PM, respectively.

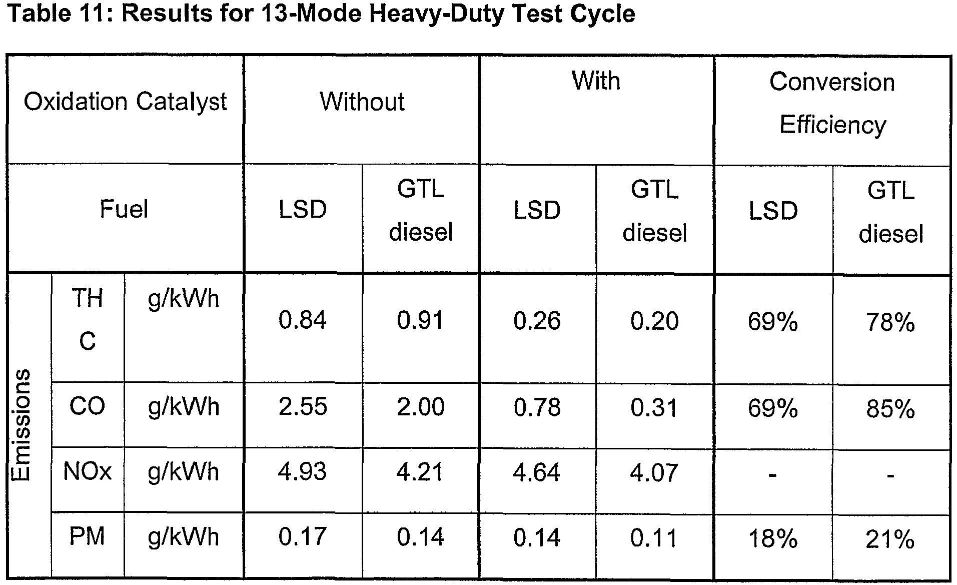

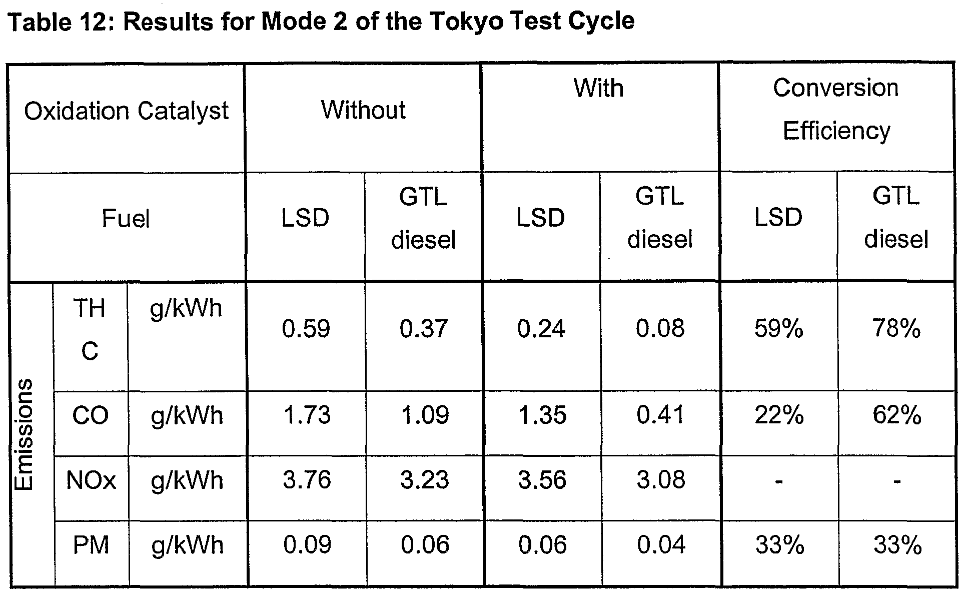

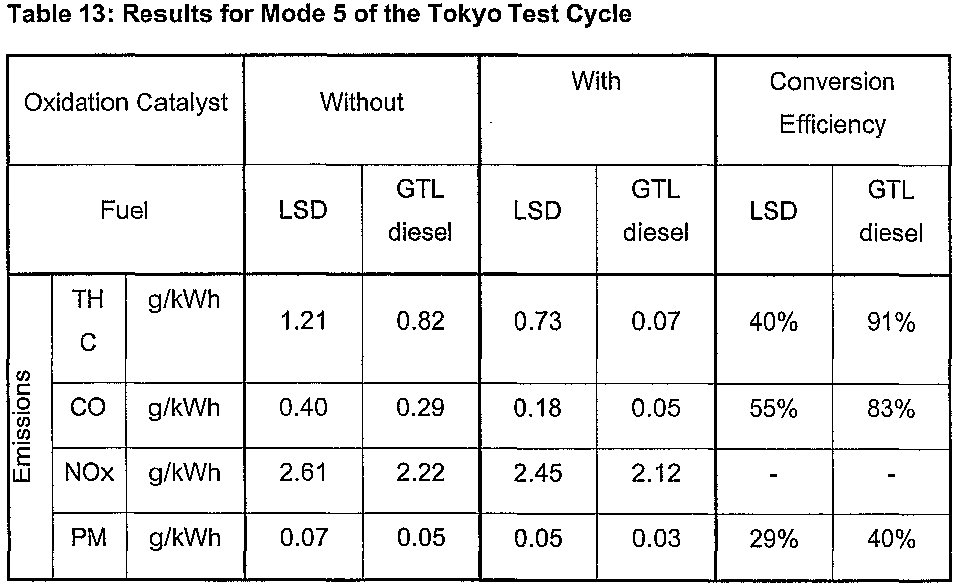

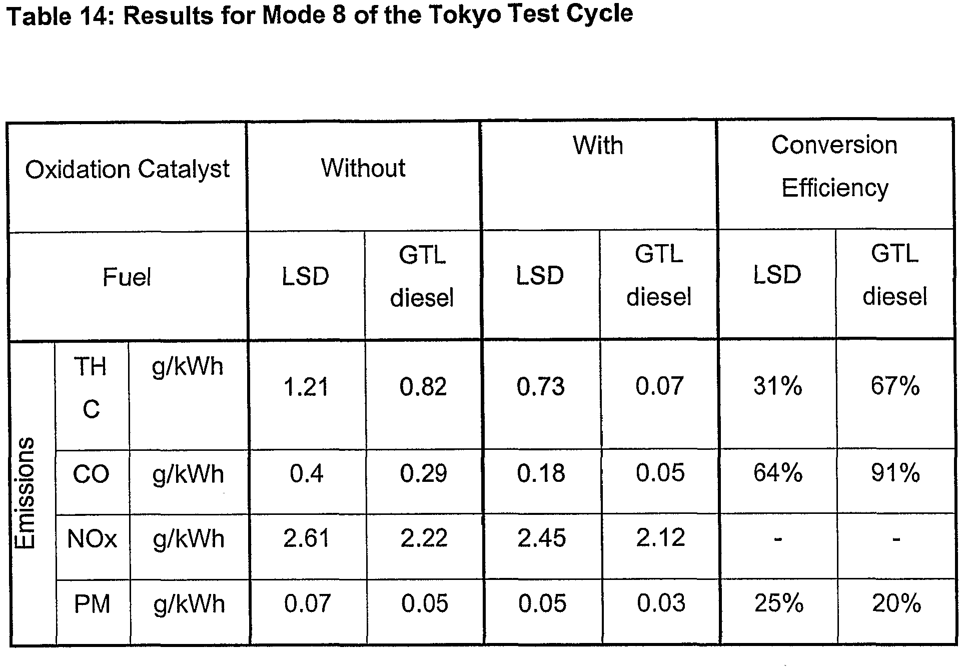

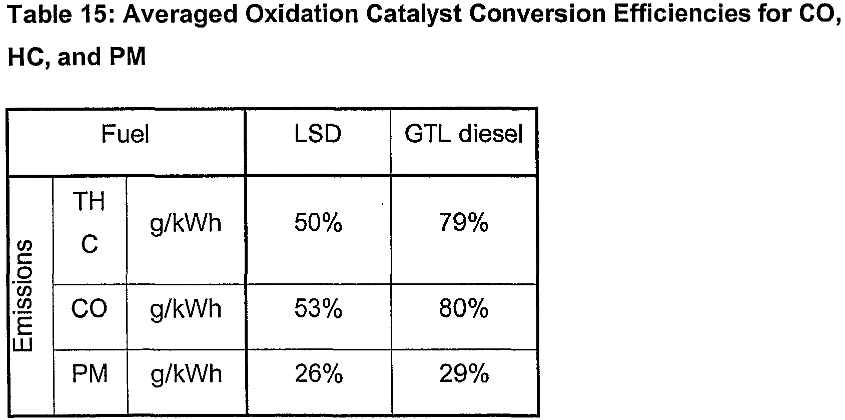

The following acronyms and abbreviations are used in the above example:
- **CHN:**: Carbon, hydrogen and nitrogen
- **CO:**: Carbon monoxide
- **CO2:**: Carbon dioxide
- **CVS:**: Constant volume sampler
- **DI:**: Direct injection
- **DPF:**: Diesel particulate filter
- **EGR:**: Exhaust gas recirculation
- **FBP:**: Final boiling point
- **GTL:**: Gas-to-liquids
- **HC:**: Unburned hydrocarbons
- **H/C**: Hydrogen/carbon ratio
- **HPLC:**: High pressure liquid chromatography
- **IBP:**: Initial boiling point
- **IC:**: Intercooled
- **LVS:**: Low volume sampler
- **NOC:**: Nippon Oil Corporation
- **NOX:**: Oxides of nitrogen
- **PM:**: Particulate matter
- **ppm:**: Parts per million
- **SOF:**: Soluble organic fraction
- **SPD:**: Slurry Phase Distillate
- **TC:**: Turbocharging
- **THC:**: Total Unburned Hydrocarbons

The following articles help in understanding the invention and the examples:
1. Abdul-Khalek, I., et al, "Diesel Exhaust Particle Size : Measurement Issues and Trends". SAE Paper 980525, Society of Automotive Engineers, 1998.
2. Schaberg, P.W., et al, "Diesel Exhaust Emissions Using Sasol Slurry Phase Distillate Process Fuels". SAE Paper 972898, Society of Automotive Engineers, 1997.
3. Khalek, I., Kittelson, D.B., and Brear, F., "Nanoparticle Growth during Dilution and Cooling of Diesel Exhaust: Experimental Investigation and Theoretical Assessment". SAE Paper 2000-01-0515, 2000.
4. Abdhul-Khalek, I.S., Kittelson, D.B., and Brear, F., "The Influence of Dilution Conditions on Diesel Exhaust Particle Size Distribution Measurements". SAE Paper 1999-01-1142,1999.
5. Abdhul-Khalek, I.S., Kittelson, D.B., and Brear, F., "The Influence of Dilution Conditions on Diesel Exhaust Particle Size Distribution Measurements". SAE Paper 1999-01-1142, 1999.
6. Schaberg, P.W., Myburgh, I.S., Botha, J.J., Roets, P.N.J., Voljoen, C.L., Dancuart, L.P., and Starr, M.E., "Diesel Exhaust Emissions Using Sasol Slurry Phase Distillate Process Fuels". SAE Paper 972898, 1997.

## Claims

1. A compression ignition (CI) engine fuel derived from a Fischer-Tropsch process, **characterized in that** the iso:n paraffins ratio of the fuel increases from a paraffin carbon number of C₉ to a paraffin carbon number of C₁₆ and then from a paraffin carbon number of C₁₉ to a paraffin carbon number of C₂₂, and that the fuel has less than 0.05% m/m sulphur, and less than 10% by mass aromatics, which fuel has on average more than 0.9 alkyl branches per paraffinic molecule as measured by H⁺ NMR analysis.

2. A compression ignition engine fuel as claimed in claim 1, which fuel comprises ≥ 50 mass% iso-paraffins.

3. A compression ignition engine fuel as claimed in claim 1 or 2, wherein the iso-paraffin to n-paraffin mass ratio is from 1:1 to 4:1, typically 21:10.

4. A compression ignition engine fuel as claimed in any one of the preceding claims, wherein the fuel is predominantly C₈ to C₂₄ material.

5. A compression ignition engine fuel as claimed in any one of the preceding claims, wherein the fuel comprises in excess of 70 mass% of C₁₂ and heavier.

6. A compression ignition engine fuel as claimed in claim 5, wherein the fuel has an average carbon number of between 13 and 19, typically 15.

7. A compression ignition engine fuel as claimed in any one of the preceding claims, wherein the fuel is substantially oxygenate free having less than 0.1% oxygen.

8. A compression ignition engine fuel as claimed in any one of the preceding claims, wherein the fuel has a cetane number of at least 55.

9. A method of improving the conversion efficiency of oxidation catalysts used in conjunction with compression ignition engines, **characterized in that** said method includes combusting a compression ignition engine fuel as claimed in any one of claims 1 to 8 in a compression ignition engine in the presence of said oxidation catalysts and an oxygen containing gas.

10. Use of a compression ignition engine fuel as claimed in any one of claims 1 to 8 in a compression ignition engine which use is **characterized in that** it comprises combusting said compression ignition engine fuel with an oxygen containing gas in a CI engine to produce low particulates emissions.

11. Use as claimed in claim 10, wherein said CI engine, when combusting said fuel, emits particulates having a maximum number weighted particle size distribution of less than 1 x 10⁸ particles per cm³ between 10 nm and 20 nm particle size.

12. Use as claimed in claim 10 or 11, wherein the particulates which are emitted have a particle size distribution in which fewer nanoparticles are produced than that emitted when a diesel fuel derived from crude oil is combusted in a compression ignition engine.

13. Use as claimed in any one of claims 10 to 12, wherein the emissions may have a reduction of more than 70% in the number of particulates in the ≤50 nm size range when compared to a low sulphur crude oil-derived diesel fuel combusted under similar conditions, typically wherein the reduction is greater in the ≤30 nm range.

## Patentansprüche

1. Nach dem Fischer-Tropsch Verfahren gewonnener Kompressionszündungsmotorkraftstoff, **dadurch gekennzeichnet, dass** sich das Iso : n-Paraffin-Verhältnis des Kraftstoffs von einer Paraffinkohlenstoffzahl von C₉ auf eine Paraffinkohlenstoffzahl von C₁₆ erhöht und danach von einer Paraffinkohlenstoffzahl von C₁₉ auf eine Paraffinkohlenstoffzahl von C₂₂, und dass der Kraftstoff weniger als 0,05% m/m Schwefel, und weniger als 10 Gewichts-% an Aromaten aufweist, wobei der Kraftstoff durchschnittlich mehr als 0,9 Alkylverzweigungen pro paraffinisches Molekül aufweist, gemäß H⁺ NMR Analyse.

2. Kompressionszündungsmotorkraftstoff gemäß Anspruch 1, worin der Kraftstoff ≥ 50 Gewichts-% an Iso-Paraffinen aufweist.

3. Kompressionszündungsmotorkraftstoff gemäß Anspruch 1 oder 2, wobei das Massenverhältnis zwischen Iso-Paraffin und n-Paraffin von 1:1 bis 4:1, normalerweise 21:10, beträgt.

4. Kompressionszündungsmotorkraftstoff gemäß einem der vorhergehenden Ansprüche, worin der Kraftstoff vorwiegend ein C₈ bis C₂₄ Material ist.

5. Kompressionszündungsmotorkraftstoff gemäß einem der vorhergehenden Ansprüche, worin der Kraftstoff mehr als 70 Gewichts-% von C₁₂ und höher aufweist.

6. Kompressionszündungsmotorkraftstoff gemäß Anspruch 5, worin der Kraftstoff eine durchschnittliche Kohlenstoffzahl von zwischen 13 und 19, normalerweise 15, aufweist.

7. Kompressionszündungsmotorkraftstoff gemäß einem der vorhergehenden Ansprüche, worin der Kraftstoff im Wesentlichen frei von Oxygenaten ist, mit weniger als 0,1% Sauerstoff.

8. Kompressionszündungsmotorkraftstoff gemäß einem der vorhergehenden Ansprüche, worin der Kraftstoff eine Cetanzahl von wenigstens 55 aufweist.

9. Verfahren zur Verbesserung des Umwandlungswirkungsgrads von zusammen mit Kompressionszündungsmotoren eingesetzten Oxidationskatalysatoren, **dadurch gekennzeichnet, dass** das genannte Verfahren die Verbrennung eines Kompressionszündungsmotorkraftstoffs gemäß einem der vorhergehenden Ansprüche 1 bis 8 in einem Kompressionszündungsmotor in Gegenwart der genannten Oxidationskatalysatoren und eines sauerstoffhaltigen Gases umfasst.

10. Verwendung eines Kompressionszündungsmotorkraftstoffs gemäß einem der vorhergehenden Ansprüche 1 bis 8 in einem Kompressionszündungsmotor, wobei die Verwendung **dadurch gekennzeichnet ist, dass** sie die Verbrennung des genannten Kompressionszündungsmotorkraftstoffs mit einem sauerstoffhaltigen Gas in einem Kompressionszündungsmotor umfasst, um niedrige Feinstaubemissionen zu erzeugen.

11. Verwendung gemäß Anspruch 10, worin der genannte Kompressionszündungsmotor bei der Verbrennung des genannten Kraftstoffs Partikel mit maximaler gewichteter Partikelgrößenverteilung von weniger als 1 x 10⁸ Partikeln pro cm³ zwischen 10 nm und 20 nm Partikelgröße ausstößt.

12. Verwendung gemäß Anspruch 10 oder 11, worin die emittierten Partikel eine Partikelgrößenverteilung aufweisen, in welcher weniger Nanopartikel erzeugt werden als bei der Verbrennung eines aus Rohöl gewonnenen Dieselkraftstoffs in einem Kompressionszündungsmotor ausgestoßen werden.

13. Verwendung gemäß einem der vorhergehenden Ansprüche 10 bis 12, worin die Emissionen eine Reduzierung von mehr als 70% in der Anzahl von Partikeln im ≤50 nm Größenbereich beim Vergleich mit unter ähnlichen Bedingungen verbranntem, aus Rohöl gewonnenem schwefelarmen Dieselkraftstoff aufweisen können, wobei die Reduzierung normalerweise im ≤30 nm Bereich höher ist.

## Revendications

1. Carburant pour moteurs à allumage par compression issu d'un procédé de Fischer-Tropsch, **caractérisé en ce que** le rapport entre les iso-paraffines et les n-paraffines du carburant augmente d'un nombre de carbones paraffinique de C₉ à un nombre de carbones paraffinique de C₁₆ et puis d'un nombre de carbones paraffinique de C₁₉ à un nombre de carbones paraffinique de C₂₂, et que le carburant contient moins de 0,05%m/m de soufre, et moins de 10% en masse d'aromates, ledit carburant présentant en moyenne plus de 0,9 ramifications alkyle par molécule paraffinique, selon l'analyse H⁺NMR.

2. Carburant pour moteurs à allumage par compression selon la revendication 1, ledit carburant comprenant ≥ 50 % en masse d'iso-paraffines.

3. Carburant pour moteurs à allumage par compression selon les revendications 1 ou 2, dans lequel le rapport de masse entre l'iso-paraffine et le n-paraffine est compris dans la plage allant de 1:1 à 4:1, généralement 21:10.

4. Carburant pour moteurs à allumage par compression selon l'une quelconque des revendications précédentes, dans lequel le carburant est principalement un matériau C₈ à C₂₄.

5. Carburant pour moteurs à allumage par compression selon l'une quelconque des revendications précédentes, dans lequel le carburant comprend plus de 70 % en masse de C₁₂ ou plus lourd.

6. Carburant pour moteurs à allumage par compression selon la revendication 5, dans lequel le carburant présente un nombre de carbones moyen compris entre 13 et 19, généralement 15.

7. Carburant pour moteurs à allumage par compression selon l'une quelconque des revendications précédentes, dans lequel le carburant est sensiblement sans oxygénats, comprenant moins de 0,1% d'oxygène.

8. Carburant pour moteurs à allumage par compression selon l'une quelconque des revendications précédentes, dans lequel le carburant présente un indice de cétane d'au moins 55.

9. Procédé pour améliorer l'efficacité de conversion de catalyseurs d'oxydation utilisés conjointement avec des moteurs à allumage par compression, **caractérisé en ce que** ledit procédé comprend la combustion d'un carburant pour moteurs à allumage par compression selon l'une quelconque des revendications 1 à 8 dans un moteur à allumage par compression en présence desdits catalyseurs d'oxydation et d'un gaz comprenant de l'oxygène.

10. Utilisation d'un carburant pour moteurs à allumage par compression selon l'une quelconque des revendications 1 à 8 dans un moteur à allumage par compression, laquelle utilisation **est caractérisée en ce qu'**elle comprend la combustion dudit carburant pour moteurs à allumage par compression avec un gaz comprenant de l'oxygène dans un moteur à allumage par compression afin de produire de faibles émissions de particules.

11. Utilisation selon la revendication 10, ledit moteur à allumage par compression émettant, lors de la combustion dudit carburant, des particules présentant une distribution granulométrique pondérée avec un nombre maximal de particules de moins de 1 x 10⁸ par cm³ dans la plage comprise entre 10 nm et 20 nm de grosseur de particules.

12. Utilisation selon les revendications 10 ou 11, les particules émises présentant une distribution granulométrique dans laquelle moins de nanoparticules sont générées que celles émises lorsqu'un carburant Diesel, provenant de pétrole brut, est brûlé dans un moteur à allumage par compression.

13. Utilisation selon l'une quelconque des revendications 10 à 12, les émissions pouvant permettre une réduction supérieure à 70% à l'égard du nombre de particules dans la plage de dimensions de ≤50 nm lors d'une comparaison avec un carburant Diesel à faible teneur en soufre provenant de pétrole brut, brûlé dans des conditions similaires, la réduction étant généralement plus élevée dans la plage de ≤30 nm.
